# Europäisches Patentamt

# European Patent Office

# Office européen des brevets

(11) Publication number: **0 071 662**
**B1**

(12) **EUROPEAN PATENT SPECIFICATION**

(45) Date of publication of patent specification: **12.11.86**

(51) Int. Cl.⁴: **C 08 J 9/06** // (C08J9/06, C08L21:00)

(21) Application number: **81106167.0**

(22) Date of filing: **06.08.81**

(54) Method for manufacturing low density rubber foamed body.

(43) Date of publication of application:
**16.02.83 Bulletin 83/07**

(45) Publication of the grant of the patent:
**12.11.86 Bulletin 86/46**

(84) Designated Contracting States:
**BE DE FR GB IT**

(56) References cited:
**EP-A-0 019 910**
**DE-C- 842 260**
**GB-A- 518 517**
**GB-A-2 041 948**

(73) Proprietor: **Toyo Rubber Chemical Industrial Corporation**
**1-1, 2-chome Nihonbashi Muromachi Chuo-ku, Tokyo (JP)**

(72) Inventor: **Kumasaka, Sadao**
**3-6-25, Mukodai-cho Tanashi-shi Tokyo (JP)**
Inventor: **Horikoshi, Shigeo**
**1-16-2, Ishihara-cho Kawagoe-shi Saitama-ken (JP)**

(74) Representative: **Hansen, Bernd, Dr.rer.nat. et al Hoffmann, Eitle & Partner Patentanwälte Arabellastrasse 4 D-8000 München 81 (DE)**

Courier Press, Leamington Spa, England.

# 0 071 662

**Description**

The present invention relates to a method for manufacturing a low density rubber foamed body containing rubber as a main constituent.

A conventional method for manufacturing foamed rubber is known according to which a mixture containing rubber, a foaming agent, and a crosslinking agent is fed into a mold, the mold is heated to foam the mixture, and the produced foamed body is released from the mold. However, with a foamed body manufactured according to this method, an expansion ratio of only about 3 to 6 and a density of about 0.15 to 0.3 are obtainable. It has thus been difficult with this method to either increase the expansion ratio or to decrease the density. When the foaming agent is used in a great amount to raise the expansion ratio, the foaming pressure within the mold rises excessively when the mold is heated. Then, when the mold is opened, the foamed body immediately expands, explodes, and is scattered away.

EP—A—0019 910 describes a process for the manufacture of a foamed body of a synthetic resin such as EVA. The foaming process is carried out on a sheet of EVA copolymer comprising 20 to 80% by weight of a foaming agent and 1 to 5% by weight of a crosslinking agent; said sheet is vulcanized in a closed mold at 160 to 180°C; then the mold is cooled down and opened to release a highly foamed body.

The present invention differs from the above described process in that it uses another starting material; besides, due to the addition of a thermoplastic synthetic resin to the natural or synthetic rubber there is obtained according to the invention a rubber foamed body which has a low density as well as low shrinking property.

DE—C—842 260 describes a method for manufacturing a closed-cell foamed rubber body of a density of about 0.15 comprising the steps of foaming a rod from a mixture which consists of natural rubber, a chemical foaming agent and a crosslinking agent.

It is an object of the present invention to provide a method for manufacturing a rubber foamed body which has a low density as well as a low shrinking property.

In order to achieve these and other objects, there is provided according to the present invention a method for manufacturing a low density rubber foamed body having a density of 0.12 or less, comprising the steps of kneading a first mixture of 100 parts by weight of natural or synthetic rubber, 10 to 60 parts by weight of a thermoplastic synthetic resin selected from the group consisting of polyethylene, polypropylene, polystyrene, polyvinylchloride, an ethylene-vinyl acetate copolymer, a polyamide resin, or an acrylic resin, and 10 to 80 parts by weight of a foaming agent at a temperature of 20 to 120°C, adding 0.5 to 15 parts by weight of a crosslinking agent to said mixture, then kneading said mixture to form a second mixture and then forming a vulcanizable and foamable rubber sheet from said second mixture; placing said sheet in a two-part mold, thereby substantially filling the mold cavity and heating said mold at a temperature of 130 to 200°C under externally applied pressure of 98 to 196 bar, thereby foaming and vulcanizing said sheet; forcibly cooling said mold to a temperature of 50 to 100°C, then releasing said foamed body from said mold, thereby expanding said sheet to provide a foamed body having a density of 0.12 or less and a volume of more than 15 times the volume of said sheet.

In accordance with the present invention, a large amount of the foaming agent may be used while preventing the drawbacks of the prior art technique such as explosion or scattering of the foamed body when the mold is opened, so that a low density rubber foamed body may be provided. A lower shrinking property may be achieved by further adding a thermoplastic synthetic resin to the raw material mixture containing natural or the synthetic rubber, the foaming agent and the crosslinking agent.

The low density rubber foamed bodies obtained according to the present invention are preferably used for various kinds of cushion materials, substitutes for springs, buoys, automobile parts, heat insulators, impact absorbers, and so on.

The raw material rubber to be used in this invention may be natural rubber or any kind of synthetic rubber. Examples of such synthetic rubbers include acrylonitrilebutadiene rubber (NBR), chloroprene rubber (CR), isoprene rubber (IR), styrene-butadiene rubber (SBR), and ethylene-propylenediene copolymer rubber (EPDM). The foaming agent to be mixed with the rubber material may be any foaming agent which is used for manufacturing conventional rubber foamed bodies and may, for example, include azodicarbonamide, dinitrosopentamethylenetetramine, p-toluenesulfonylhydrazine, azobisisobutyronitrile, diazoaminobenzene, and toluenesulfonyl semicarbazide. The foaming agent is used in the amount of 10 to 80 parts by weight based on 100 parts by weight of the raw material rubber, although the preferred amount varies depending upon the kind of natural or synthetic rubber to be used as the main constituent and the density of the desired foamed body. When this amount is smaller than 10 parts by weight, a sufficiently highly foamed body may not be obtained. When this amount exceeds 80 parts by weight, the foamed body may cause breakdown, or a foamed body having adequate impact resilience may not be obtained. The method also requires a crosslinking agent in addition to the foaming agent. Preferable crosslinking agents may include sulfur, zinc oxide, and organic peroxides. Examples of organic peroxides may include dicumylperoxide, 2,5 - dimethyl - 2,5 - di(tert. - butylperoxy)hexane, 1,3 - bis(tert. - butylperoxyisopropyl)benzene, n-octadecylazidoformate, and tert.-butylperoxycumene. Although the amount of the crosslinking agent as mentioned above may differ depending upon the raw material rubber used, the kind and amount of foaming agent used and other conditions, it is preferably within the range of 0.5 to 15 parts by weight based on 100 parts of the raw material rubber. In addition to the foaming agent

2

and the crosslinking agent, various other additives may optionally be added. For example, there may be added a filler such as carbon black, clay, and calcium carbonate; a foaming auxiliary such as urea, stearic acid, lauric acid, and salicylic acid; a metal oxide such as zinc oxide; and a colorant. An antioxidant may also be included.

The thermoplastic synthetic resin used in the present invention includes polyethylene, polypropylene, polystyrene, polyvinyl chloride, an ethylene-vinyl acetate copolymer resin, a polyamide resin and an acrylic resin. If the amount of the thermoplastic synthetic resin does not reach 10 parts by weight, satisfactory prevention of shrinkage may not be achieved. If this amount exceeds 60 parts by weight, the rubbery resilience is degraded, resulting in an unsatisfactory product.

The raw material mixture is well kneaded in a kneader such as a roll or a mixer and is formed into a sheet. For kneading the raw material, the components other than the crosslinking agent are first well kneaded with a roll at a surface temperature of 20 to 120°C for about 15 to 60 minutes. After the crosslinking agent is added to the mixture, further kneading is performed for 5 minutes to provide a final raw material rubber sheet. Although the rubber sheet must have a thickness such that it may be put in a mold, a plurality of such rubber sheets may also be put in a single mold. Therefore, the thickness of the rubber sheet need not be the same as the size of the cavity of the mold.

The raw material rubber sheet thus obtained is placed in a mold, the lid of the mold is closed, and the mold is pressed from the upper and lower sides. The raw material rubber sheet is placed in the mold so that the rubber sheet substantially fills the cavity of the mold. The shape of the mold may be arbitrary. However, after the mold is heated under pressure for foaming the sheet and the mold is opened, the foamed body abruptly pops out of the mold while expanding in volume. Therefore, the mold preferably does not have projections within the cavity and has an upwardly flared opening. For pressing the mold from the upper and lower sides thereof, a press machine may be used. According to a further preferable method, the upper and lower halves of the mold are prefixed to the press machine, and the opening-and closing of the mold is performed by vertically displacing these upper and lower halves. When placing the raw material rubber sheet which has been subjected to kneading into the mold, the sheet need not be aged in advance. Thus, the sheet may be placed directly in the mold where it is subjected to heat and pressure according to the present invention. According to the conventional method for manufacturing the rubber foamed body, in order to foam the rubber sheet which has been kneaded, aging for about 24 hours has been required before the sheet may be heated under pressure as an essential step of the method. However, this aging step is not necessary according to the present invention. Even when the raw material rubber sheet is subjected to the foaming step immediately after kneading, phenomena such as foam nonuniformity and breakdown do not occur, and continuous production is possible. After the raw material has been placed within the mold, the mold is then heated under pressure for crosslinking and foaming. Although the heating temperature is mainly determined by the decomposition temperature of the foaming agent used, it is usually 130 to 200°C. The pressure to be exerted on the mold is sufficient when it is within a range of 98 to 196 bar. After foaming has proceeded substantially, the mold is cooled. The cooling temperature changes according to the raw material rubber used, the kind and amount of the foaming agent used, the kind and amount of the crosslinking agent used, and other conditions. However, it is within a range of about 50 to 100°C. The cooling method adopts forcible cooling rather than natural cooling and may, for example, adopt the process of circulating water through the jacket of the mold. Circulation of air may alternatively be adopted for this purpose. When this cooling is performed, the gas pressure generated within the mold during the heating and foaming step is reduced and the bonding between the polymer molecules is also sufficiently maintained. The mold is opened under this condition. Upon opening the mold, the rubber foamed body pops out of the mold without exploding, and the volume of the foamed body instantaneously increases more than about 15 times the original volume. Thus, the low density rubber foamed body of the present invention is obtained. The density of the resultant rubber foamed body is reduced to about 0.12 or lower.

The present invention will be more clearly understood from the following description made with reference to the examples.

# 0 071 662

## Example 1

| | A | B |
|---|---|---|
| Styrene-butadiene rubber (SBR #1500) | 100 parts by weight | 100 parts by weight |
| Ethylene-vinyl acetate copolymer | — | 25 parts by weight |
| Zinc stearate | 3.0 parts by weight | 3.0 parts by weight |
| Zinc oxide | 5.0 parts by weight | 5.0 parts by weight |
| Carbon black | 30 parts by weight | 30 parts by weight |
| Oil (softening agent) | 15 parts by weight | 15 parts by weight |
| Azodicarbonamide | 20 parts by weight | 20 parts by weight |
| Sulfur | 1.0 part by weight | 1.0 part by weight |

Rubber sheets 2 mm in thickness were obtained from the above compositions by kneading at 50°C for composition A and at 100°C for composition B. The kneading time was 25 minutes in each case. The two rubber sheets were separately placed into molds having dimensions of 25 cm×25 cm×1.5 cm and having an opening flaring at an angle of 60°C, to occupy substantially 95% of the cavity of each mold. The molds were heated and pressed by press machines for 10 minutes at a heating temperature of 170°C and a pressure of 147 bar.

Water was circulated in the jackets of the molds to drop the temperature of the molds to 85°C and this temperature was maintained for 6 minutes. The foamed bodies were then released from the molds. The foamed body of the composition A had a density of 0.048, and the foamed body of the composition B had a density of 0.052; neither foamed body exhibited cracks or foam nonuniformity. The shrinkage as measured over time was as follows. For measuring the shrinkage, a mark 10 cm in length was made on the surface of the foamed body immediately after it was released from the mold, and the shrinkage of this line was measured.

### TABLE 1

Unit: cm

| | Immediately after foaming | After 6 h | After 12 h | After 24 h | After 3 days | After 5 days | After 10 days |
|---|---|---|---|---|---|---|---|
| A | 10 | 9.5 | 9.3 | 8.9 | 8.5 | 8.2 | 8.1 |
| B | 10 | 9.6 | 9.5 | 9.4 | 9.2 | 9.1 | 9.1 |

## Example 2

| | C | D |
|---|---|---|
| Natural rubber | 100 parts by weight | 100 parts by weight |
| Polyvinyl chloride (paste resin) | — | 40 parts by weight |
| DOP | 10 parts by weight | 25 parts by weight |
| Zinc oxide | 3.0 parts by weight | 3.0 parts by weight |
| Zinc stearate | 3.0 parts by weight | 3.0 parts by weight |
| Azodicarbonamide | 25 parts by weight | 25 parts by weight |
| Sulfur | 1.0 part by weight | 1.0 part by weight |
| Carbon black | 15 parts by weight | 15 parts by weight |

4

# 0 071 662

Rubber sheets 2 mm in thickness were obtained from the above compositions C and D by kneading the component mixtures at 35°C for 35 minutes for both of the compositions. The rubber sheets were separately placed in molds as used in Example 1 to fill substantially 95% of the cavities of the molds. After heating the molds at 170°C and at a pressure of 147 bar, cold water was passed through the jackets of the molds to lower the temperature to 85°C. The molds were maintained at this temperature for 6 minutes. The foamed bodies were released from the molds. The foamed body of the composition C had a density of 0.038 and the foamed body of the composition D had a density of 0.04. The outer appearance of the foamed bodies was the same as that of the foamed bodies obtained in Example 1. The shrinkage of the foamed bodies was measured in a similar manner as in Example 1, and the obtained results are shown in Table 2 below:

TABLE 2

Unit:cm

|  | Immediately after foaming | After 6 h | After 12 h | After 24 h | After 3 days | After 5 days | After 10 days |
|---|---|---|---|---|---|---|---|
| C | 10 | 9.6 | 9.4 | 9.2 | 8.8 | 8.6 | 8.5 |
| D | 10 | 9.8 | 9.7 | 9.6 | 9.5 | 9.4 | 9.4 |

## Example 3

|  | E | F |
|---|---|---|
| Chloroprene rubber | 100 parts by weight | 100 parts by weight |
| Polyethylene | — | 20 parts by weight |
| Zinc stearate | 3.0 parts by weight | 3.0 parts by weight |
| Zinc oxide | 4.0 parts by weight | 4.0 parts by weight |
| Carbon black | 20 parts by weight | 20 parts by weight |
| Calcium carbonate | 10 parts by weight | 10 parts by weight |
| Oil (softening agent) | 10 parts by weight | 10 parts by weight |
| Azodicarbonamide | 20 parts by weight | 20 parts by weight |

Rubber sheets 2 mm in thickness were obtained by kneading the above components at 50°C for composition E and at 110°C for composition F for 25 minutes each. These rubber sheets were placed in molds as used in Example 1 to occupy substantially 95% of the cavities of these molds. The molds were then heated at 170°C and pressed at 147 bar for 6 minutes. Cold water was then passed through the jackets of the molds to cool them to 85°C. The molds were maintained at this temperature for 6 minutes. The density of the obtained product was 0.07 for the composition E and 0.073 for the composition F. The outer appearance of the foamed bodies was the same as that obtained in Example 1. The shrinkage of the foamed bodies was measured in a similar manner as in Example 1, and the obtained results are shown in Table 3 below:

TABLE 3

Unit:cm

|  | Immediately after foaming | After 6 h | After 12 h | After 24 h | After 3 days | After 5 days | After 10 days |
|---|---|---|---|---|---|---|---|
| E | 10 | 9.4 | 9.2 | 8.8 | 8.3 | 8.0 | 7.8 |
| F | 10 | 9.5 | 9.3 | 9.2 | 9.1 | 9.1 | 9.05 |

5

# 0 071 662

Example 4

| | G | H |
|---|---|---|
| Styrene-butadiene rubber (SBR) | 100 parts by weight | 100 parts by weight |
| Ethylene-vinyl acetate copolymer | — | 25 parts by weight |
| Zinc stearate | 3.0 parts by weight | 3.0 parts by weight |
| Zinc oxide | 5.0 parts by weight | 5.0 parts by weight |
| Carbon black | 50 parts by weight | 50 parts by weight |
| Oil (softening agent) | 20 parts by weight | 20 parts by weight |
| Azodicarbonamide | 12 parts by weight | 12 parts by weight |
| Sulfur | 1.0 part by weight | 1.0 part by weight |

Rubber sheets 2 mm in thickness were obtained by kneading the above components by a roll at 50°C for composition G and at 100°C for composition H for 30 minutes each. These rubber sheets were separately placed in molds as used in Example 1 to occupy substantially 95% of the cavities of the molds. The molds were heated and pressed at 170°C and 147 bar for 10 minutes by a press machine. Cold water was passed through the jackets of the molds to cool the molds to 85°C. The molds were kept at this temperature for 6 minutes. The foamed bodies were released from these molds. The density of the foamed body of the composition G was 0.12 and the density of the foamed body of the composition H was 0.12. The outer appearance of these foamed bodies was the same as that obtained in Example 1. The shrinkage of these foamed bodies was measured in a similar manner as in Example 1, and the obtained results are shown in Table 4 below:

TABLE 4

Unit:cm

| | Immediately after foaming | After 6 h | After 12 h | After 24 h | After 3 days | After 5 days | After 10 days |
|---|---|---|---|---|---|---|---|
| G | 10 | 9.6 | 9.4 | 9.1 | 8.6 | 8.5 | 8.4 |
| H | 10 | 9.8 | 9.7 | 9.5 | 9.3 | 9.2 | 9.2 |

## Claims

1. A method for manufacturing a low density rubber foamed body having a density of 0.12 or less, comprising the steps of kneading a first mixture of 100 parts by weight of natural or synthetic rubber, 10 to 60 parts by weight of a thermoplastic synthetic resin selected from the group consisting of polyethylene, polypropylene, polystyrene, polyvinylchloride, an ethylene-vinyl acetate copolymer, a polyamide resin, or an acrylic resin, and 10 to 80 parts by weight of a foaming agent at a temperature of 20 to 120°C, adding 0.5 to 15 parts by weight of a crosslinking agent to said mixture, then kneading said mixture to form a second mixture and then forming a vulcanizable and foamable rubber sheet from said second mixture; placing said sheet in a two-part mold, thereby substantially filling the mold cavity and heating said mold to a temperature of 130 to 200°C under externally applied pressure of 98 to 196 bar, thereby foaming and vulcanizing said sheet; forcibly cooling said mold to a temperature of 50 to 100°C, then releasing said foamed body from said mold, thereby expanding said sheet to provide a foamed body having a density of 0.12 or less and a volume of more than 15 times the volume of said sheet.

2. A method according to claim 1, wherein said foaming agent is a member selected from the group consisting of azodicarbonamide, dinitrosopenta-methylenetetramine, p-toluenesulfonylhydrazine, azo-bis-isobutyronitrile, diazoaminobenzene, and toluenesulfonyl semicarbazide.

3. A method according to claim 1 and 2, wherein said crosslinking agent is a member selected from the group consisting of sulfur, zinc oxide, dicumylperoxide, 2,5 - dimethyl - 2,5 - di(tert. - butylperoxy)hexane, 1,3 - bis(tert. - butylperoxy - isopropyl)benzene, n - octadecylazidoformate, and tert.-butylperoxycumene.

6

# 0 071 662

## Patentansprüche

1. Verfahren zur Herstellung von Schaumgummikörpern geringer Dichte, die eine Dichte von 0,12 oder weniger aufweisen, gekennzeichnet durch die Schritte: Durchkneten eines ersten Gemisches aus 100 Gew.-Teilen natürlichem oder synthetischem Gummi, 10 bis 60 Gew.-Teilen eines thermoplastischen synthetischen Harzes, ausgewählt aus der Gruppe bestehend aus Polyethylen, Polypropylen, Polystyrol, Polyvinylchlorid, einem Ethylen-Vinylacetat-Copolymer, einem Polyamidharz oder einem Acrylharz, und 10 bis 80 Gew.-Teilen eines Treibmittels bei einer Temperatur von 20 bis 120°C, Zugabe von 0,5 bis 15 Gew.-Teilen eines Vernetzungsmittels zu dem genannten Gemisch, dann Durchkneten des genannten Gemisches unter Bildung eines zweiten Gemisches und dann Bilden eines vernetzbaren und schäumbaren Gummi-Sheets aus dem genannten zweiten Gemisch; Plazieren des genannten Sheets in eine zweiteilige Form, wobei im wesentlichen die Form ausgefüllt wird, und Erwärmen der genannten Form auf eine Temperatur von 130 bis 200°C unter einem extern angewandten Druck von 98 bis 196 bar, wobei das genannten Sheet geschäumt und vernetzt wird; Abschreckkühlen der genannten Form auf eine Temperatur von 50 bis 100°C, dann Freisetzen des genannten Schaumkörpers aus der Form, wobei sich das genannte Sheet unter Bildung eines Schaumkörpers mit einer Dichte von 0,12 oder weniger und einem Volumen von mehr als dem 15-fachen des Sheet-Volumens ausdehnt.

2. Verfahren nach Anspruch 1, dadurch gekennzeichnet, dass das Treibmittel ausgewählt wird aus der Gruppe bestehend aus Azodicarbonamid, Dinitrosopenta-methylen-tetramin, p-Toluolsulfonylhydrazin, Azo-bis-isobutyronitril, Diazoaminobenzol und Toluolsulfonylsemicarbazid.

3. Verfahren nach Anspruch 1 und 2, dadurch gekennzeichnet, dass das Vernetzungsmittel ausgewählt wird aus der Gruppe bestehend aus Schwefel, Zinkoxid, Dicumylperoxid, 2,5 - Dimethyl - 2,5 - di(tert. - butylperoxy)hexan, 1,3 - bis(tert. - Butylperoxyisopropyl) - benzol, n-Octadecylazidoformiat und tert.- Butylperoxy-cumol.

## Revendications

1. Procédé pour fabriquer un corps en mousse de caoutchouc à basse densité, ayant une densité égale ou inférieure à 0,12, comprenant les étapes consistant à malaxer un premier mélange de 100 parties en poids de caoutchouc naturel ou synthétique, 10 à 60 parties en poids d'une résine synthétique thermoplastique choisie dans l'ensemble consistant en du polyéthylène, du polypropylène, du polystyrène, du chlorure de polyvinyle, un copolymère éthylène/acétate de vinyle, une résine de polyamide ou une résine acrylique, et 10 à 80 parties en poids d'un agent de moussage à une température de 20 à 120°C, à ajouter 0,5 à 15 parties en poids d'un agent de réticulation audit mélange, puis à malaxer ledit mélange pour former un second mélange et à obtenir, à partir de ce second mélange, une feuille de caoutchouc vulcanisable et moussable; à placer ladite feuille dans un moule en deux parties, en remplissant pratiquement la cavité du moule, et à chauffer ledit moule jusqu'à une température de 130 à 200°C sous une pression appliquée de l'extérieur de 98 à 196 bars, de façon à provoquer le moussage et la vulcanisation de ladite feuille; à refroidir de force ledit moule jusqu'à une température de 50 à 100°C, puis à libérer le corps en forme de mousse dudit moule, ce qui provoque la dilatation de ladite feuille et donne un corps en forme de mousse ayant une densité égale ou inférieure à 0,12 et un volume représentant plus de 15 fois le volume de ladite feuille.

2. Procédé selon la revendication 1, dans lequel ledit agent de moussage est choisi dans l'ensemble constitué par l'azodicarboxamide, la dinitrosopenta-méthylène-tétramine, la p-tolùnesulfonylhydrazine, l'azo-bis-isobutyronitrile, le diazoaminobenzène et le toluènesulfonyl semicarbazide.

3. Procédé selon la revendication 1 et 2, dans lequel ledit agent de réticulation est choisi dans l'ensemble constitué par le soufre, l'oxyde de zinc, le peroxyde de dicumyle, le 2,5 - diméthyl - 2,5 - di(tertiobutylperoxy)hexane, le 1,3 - bis(tertiobutylperoxy - isopropyl)benzène, l'azidoformiate de n-octadécyle et le tertiobutylperoxycumène.